# EUROPEAN PATENT SPECIFICATION

(11) **EP 3 454 466 B1**
(45) Date of publication and mention of the grant of the patent: **11.11.2020**
(21) Application number: 18192781.5
(22) Date of filing: 05.09.2018
(51) Int. Cl.: H02P 6/00, H02P 6/18, H02P 21/00

(54) **MOTOR CONTROL CIRCUIT WITH DIAGNOSTIC CAPABILITIES**
MOTORSTEUERSCHALTUNG MIT DIAGNOSEFÄHIGKEITEN
CIRCUIT DE COMMANDE DE MOTEUR AVEC CAPACITÉS DE DIAGNOSTIQUE

(30) Priority: 07.09.2017 US 201715697846
(43) Date of publication of application: 13.03.2019
(73) Proprietor: Allegro MicroSystems, LLC, Manchester, NH 03103-3353 (US)
(72) Inventor: Haas, David J., Concord, NH 03301-7922 (US)
(74) Representative: South, Nicholas Geoffrey

(56) References cited:
- EP-A2- 0 848 489
- CN-A- 105 634 361
- JP-A- 2006 067 667
- JP-A- 2010 045 914
- US-A1- 2003 127 289
- US-A1- 2005 007 044
- US-A1- 2012 211 299
- US-A1- 2014 333 241

## Description

### FIELD

This disclosure relates generally to motor control systems and, more particularly, to motor control systems and associated circuits and methods with diagnostic capabilities.

### BACKGROUND

As is known, various types of control systems are used to implement motor control in a variety of applications. For example, in some motor control systems, the electromotive force, or back-EMF, produced by the spinning motor is measured to determine the position and/or speed of the motor and fed back to the controller. Such systems generally do not employ a separate sensor to detect the motor position and/or speed and thus, are sometimes referred to as "sensorless systems." One motor type that generally employs a sensorless control system is a brushless DC motor (BLDC).

In other motor control systems, separate sensors are employed to detect the position and/or speed of the motor for use by the controller. These types of systems can be referred to as "sensor-based" systems. One motor type that generally employs a sensor-based control system is a permanent magnet synchronous motor (PMSM).

Motors and their motor control systems are widely used in automobiles and other safety critical applications. There are a variety of specifications that set forth requirements related to permissible motor control quality levels, failure rates, and overall functional safety.

US 2012/0211299 A1 discloses a motor control system of a three phase motor, comprising a PWM gate control, a rotational angle sensor, voltage sensors, current sensors, and an electrical angle estimation section that calculates an estimated electrical angle on the basis of an inductive voltage generated in a motor, and obtains an estimated electrical angle by correcting the estimated electrical angle by an electrical angle correction amount. On the basis of a detection value which represents the difference in electrical angle between the q-axis and the δ-axis calculated by an electrical-angle-error detection section, an electrical-angle-correction-amount computation section calculates an electrical angle correction amount such that the electrical angle of the δ-axis falls within a prescribed angular range, which lags behind the q-axis in terms of electrical angle. Thus, when sensorless control is performed, a phenomenon in which the motor loses synchronism can be restrained.

### SUMMARY

A motor control system for controlling operation of a motor having a plurality of windings includes a gate driver to provide a control signal to one or more switching elements controlling a voltage applied to each of the plurality of windings, a controller to generate a PWM signal based on a received demand signal and to provide the PWM signal to the gate driver, a voltage measurement circuit coupled to one or more of the plurality of windings to measure a voltage associated with the one or more of the plurality of windings to which the voltage measurement circuit is coupled, and a current measurement circuit coupled to one or more of the plurality of windings to measure a current through the one or more of the plurality of windings to which the current measurement circuit is coupled. An estimator is responsive to the voltage measured by the voltage measurement circuit and/or to the current measured by the current measurement circuit to generate an estimated position signal indicative of an estimate of a position of the motor and/or an estimated speed signal indicative of an estimate of a speed of the motor and to provide the estimated position signal and/or the estimated speed signal to the controller. The motor control system further includes a diagnostic checker circuit responsive to the estimated position signal and/or the estimated speed signal to compare the estimated position signal and/or the estimated speed signal to a respective one of an actual position of the motor or an actual speed of the motor.

Features may include one or more of the following individually or in combination with other features. The estimator may be responsive to the voltage measured by the voltage measurement circuit and to the current measured by the current measurement circuit to generate the estimated position signal and the estimated speed signal, in which case the checker circuit is responsive to the estimated position signal and to the estimated speed signal and configured to compare the estimated position signal to the actual position of the motor and to compare the estimated speed signal to the actual speed of the motor. The motor control system may include a sensor circuit configured to measure the actual position of the motor and the actual speed of the motor. The sensor circuit may be provided by one or more of: an angular encoder, a resolver, or a position sensor. The sensor circuit may include one or more magnetic field sensing elements as may take the form of Hall effect elements and/or magnetoresistance elements. In the case of magnetoresistance elements, the elements may take the form of one or more of GMR elements, AMR elements, TMR elements, and/or MJT elements.

The current measurement circuit may be a low side bridge or high side bridge current measurement circuit or an in-phase current measurement circuit. In low side or high side current measurement embodiments, the current measurement circuit may include one or more shunt elements or one or more magnetic field sensing elements coupled to one or more of the plurality of windings. In in-phase current measurement embodiments, the current measurement circuit may include one or more magnetic field sensing elements or one or more series resistors configured to sense the current through one or more of the plurality of windings. In the case of a current measurement circuit including one or more magnetic field sensing elements, the elements may take the form of Hall effect elements and/or magnetoresistance elements and in the case of magnetoresistance elements, the elements may take the form of one or more of GMR elements, AMR elements, TMR elements, and/or MJT elements.

The motor may be any of various motor types including a brushless DC motor (BLDC), an inductive AC motor (IACM), permanent magnet synchronous motor (PMSM) or other variations of synchronous or asynchronous AC machines.

The checker circuit generates a diagnostic output signal indicative of a fault if the estimated position signal differs from the actual position of the motor by greater than a first predetermined amount or if the estimated speed signal differs from the actual speed of the motor by more than a second predetermined amount. In some embodiments, the checker circuit comprises a window comparator. The checker circuit may include a first window comparator responsive to the estimated position signal and to the actual position of the motor to generate the diagnostic output signal indicative of a fault if the estimated position signal differs from the actual position of the motor by greater than the first predetermined amount and a second window comparator responsive to the estimated speed signal and to the actual speed of the motor to generate the diagnostic output signal indicative of a fault if the estimated speed signal differs from the actual speed of the motor by more than the second predetermined amount.

In some embodiments, the checker circuit may include a time delay synchronizer providing a clock signal to the first window comparator and to the second window comparator. In other embodiments, the checker circuit further comprises a first delay element coupled to an input of the first window comparator and configured to delay the estimated position signal for coupling to the first window comparator and a second delay element coupled to an input of the second window comparator and configured to delay the estimated speed signal for coupling to the second window comparator.

A single semiconductor die configured to support the estimator and the checker circuit. In some embodiments, the single semiconductor die additionally supports the circuit configured to measure the actual position of the motor and the actual speed of the motor.

Also described is a method to detect a fault in a motor control system for controlling operation of a motor having a plurality of windings and comprising a gate driver to provide a control signal to one or more switching elements controlling a voltage applied to the plurality of windings. The method includes measuring a voltage associated with one or more of the plurality of windings, measuring a current through one or more of the plurality of windings, estimating a position of the motor and/or a speed of the motor in response to the measured voltage and the measured current, and providing a fault output signal indicative of the fault if the estimated motor position differs from an actual motor position by more than a first predetermined amount or if the estimated motor speed differs from an actual motor speed by more than a second predetermined amount.

Features may include one or more of the following individually or in combination with other features. The method may include estimating both the position of the motor and the speed of the motor in response to the measured voltage and the measured current. The method may further include measuring the actual motor position and the actual motor speed.

In some embodiments, estimating a position of the motor and/or a speed of the motor, the providing a fault output signal, and the measuring the actual motor position and the actual motor speed are implemented on a single semiconductor die.

Measuring the current through the plurality of windings may include coupling one or more shunt elements in series with the plurality of windings. Alternatively, measuring the current through the plurality of windings may include providing one or more magnetic field sensing elements or one or more in-phase series resistors to sense the current through the plurality of windings.

The fault output signal may be provided by comparing the estimated motor position to the actual motor position and comparing the estimated motor speed to the actual motor speed.

According to another aspect of the disclosure, a motor control system comprising includes means for controlling a voltage applied to each of a plurality of windings of a motor, means for sensing a voltage associated with one or more of the plurality of motor windings, means for sensing a current through one or more of the plurality of motor windings, means for estimating a position of the motor and/or a speed of the motor, and means for comparing the estimated motor position to an actual motor position and/or the estimated motor speed to an actual motor speed.

Features may include one or more of the following individually or in combination with other features. The comparing means may include first means for comparing the estimated motor position to the actual motor position and second means for comparing the estimated motor speed to the actual motor speed. The method may further include means for measuring the actual motor position and the actual motor speed, such as may include one or more of an angular encoder, a resolver, or a position sensor. In some embodiments, a single semiconductor substrate is configured to support the estimating means, the comparing means, and the measuring means.

### BRIEF DESCRIPTION OF THE DRAWINGS

The foregoing features of the disclosure, as well as the disclosure itself may be more fully understood from the following detailed description of the drawings. The drawings aid in explaining and understanding the disclosed technology. Since it is often impractical or impossible to illustrate and describe every possible embodiment, the provided figures depict one or more exemplary embodiments. Accordingly, the figures are not intended to limit the scope of the invention. Like numbers in the figures denote like elements.
FIG. 1 is a block diagram of a motor control system according to the disclosure;
FIG. 2 is a block diagram of an alternative motor control system according to the disclosure;
FIG. 3 is a block diagram of a diagnostic checker circuit; and
FIG. 3A is a block diagram of an alternative diagnostic checker circuit.

### DETAILED DESCRIPTION

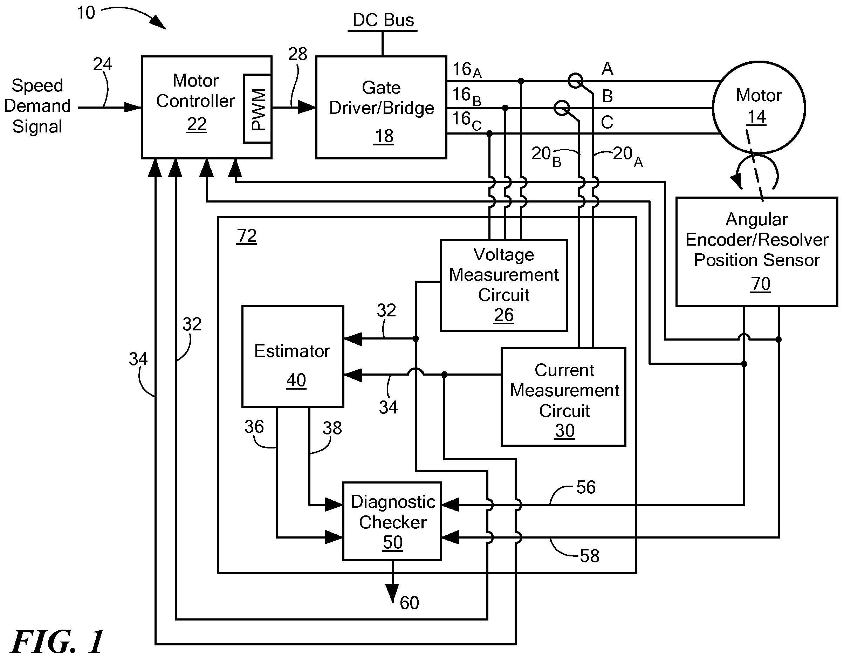

Referring to FIG. 1, a motor control system 10 for controlling operation of a motor 14 includes a gate driver and bridge circuit 18, a controller 22, a voltage measurement circuit 26, and a current measurement circuit 30. The motor 14 has a plurality of windings corresponding to phases of the motor and the gate driver 18 is configured to provide a control signal to switching elements (as may be provided in the form of a bridge or an inverter within block 18) controlling a voltage 16_{A}, 16_{B}, 16c applied to each of the windings. The controller 22 is responsive to a demand signal 24 and is configured to generate a PWM signal 28 for coupling to the gate driver 18.

It will be appreciated that the motor 14 can be selected from a variety of motor types including, but not limited to a brushless DC motor (BLDC), an inductive AC motor (IACM), a permanent magnet synchronous motor (PMSM), or other variations of synchronous or asynchronous AC machines.

The voltage measurement circuit 26 is coupled to one or more of the motor windings to measure one of more of the winding voltages 16_{A}, 16_{B}, 16c. The current measurement circuit 30 is coupled to one or more of the motor windings to measure one of more of the currents through the windings. In the example of FIG. 1, currents 20_{A}, 20_{B} through two of the motor windings are measured by the current measurement circuit 30.

The motor control system 10 further includes an estimator 40 coupled to receive a measured voltage signal 32 from the voltage measurement circuit 26 and to receive a measured current signal 34 from the current measurement circuit 30. In response to the measured voltage signal 32 and measured current signal 34, the estimator 40 generates an estimated position signal 36 indicative of an estimate of a position of the motor 14 and/or an estimated speed signal 38 indicative of an estimate of the speed of the motor. The estimator 40 may alternatively be referred to as an observer.

Various configurations are possible for the estimator 40 depending at least in part on the type of motor 14. For example, in embodiments in which trapezoidal motor control is employed to control a brushless DC motor, detection of zero crossings of current through one or more windings is performed by the estimator 40 to generate an estimate of the motor position and/or speed. It will be appreciated however that in such zero crossing detecting configurations, a measure of the phase voltage(s) is not required. One such observer is described in a co-pending U.S. Patent Application No. 15/163,943, entitled "Sensorless Brushless Direct Current (BLDC) Motor Position Control", which is hereby incorporated herein by reference in its entirety.

In other embodiments, such as those employing field oriented control, as is sometimes used to control a permanent magnet synchronous motor, the estimator 40 operates on transformed motor signals to track motor operation in order to thereby generate motor drive signals to achieve desired motor operation. Illustrative such estimators can include neural network based "on-line" learning, a model reference adaptive system (MRAS), Kalman filters, an adaptive non-linear flux observer, and/or a sliding mode observer.

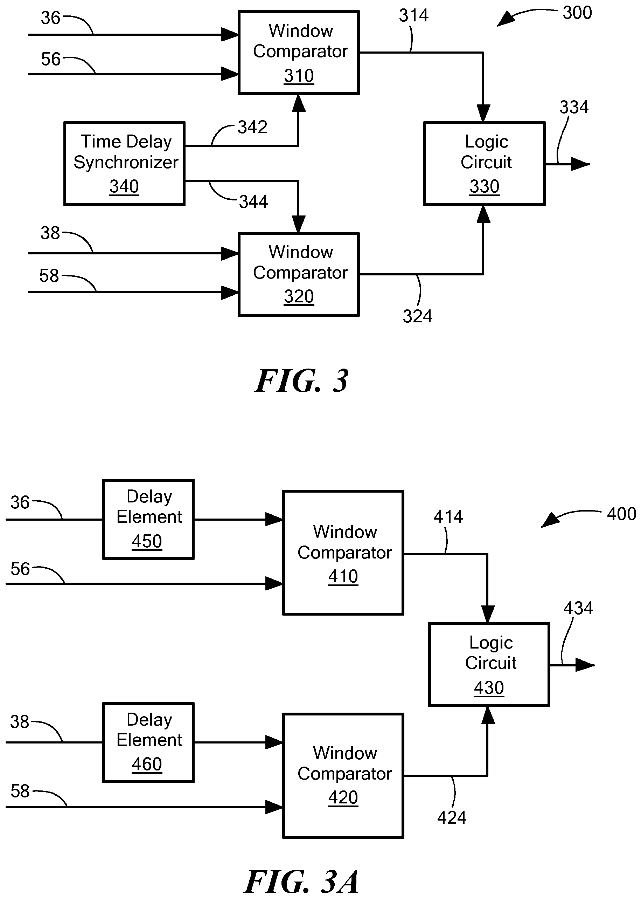

A diagnostic checker circuit 50 is coupled to receive the estimated position signal 36 and the estimated speed signal 38, as well as an actual position signal 56 and an actual speed signal 58 and is configured to perform a diagnostic comparison function. More particularly, the diagnostic checker circuit 50 is configured to compare the estimated position signal 36 to the actual position signal 56 and also to compare the estimated speed signal 38 to the actual speed signal 58. A diagnostic output signal 60 is provided by the diagnostic checker circuit 50 to indicate a fault if the estimated position signal 36 differs from the actual position signal 56 by more than a first predetermined amount or if the estimated speed signal 38 differs from the actual speed signal 58 by more than a second predetermined amount. Additional details and examples of the diagnostic checker circuit 50 are described below and shown in FIGs. 3 and 3A.

The diagnostic output signal 60 can be provided in various formats to external circuits or systems. For example, signal 60 can encoded in various known communication formats or protocols, including Controller Area Network (CAN), Single Edge Nibble Transmission (SENT), Manchester, Serial Peripheral interface (SPI), Inter-Integrated Circuit (I²C), Local Interconnect Network (LIN), etc. In automotive applications, the diagnostic output signal 60 can be provided to an Engine Control Unit (ECU).

It will be appreciated that although the diagnostic checker circuit 50 is shown to be responsive to both estimated and actual motor position signals 36, 56 and also to estimated and actual motor speed signals 38, 58, in embodiments, the diagnostic checker circuit 50 can process only one such signal type. In other words, in some embodiments, the diagnostic checker circuit 50 is responsive only to the estimated position signal 36 and to the actual position signal 56 and thus, in such embodiments, the diagnostic output signal 60 indicates a fault only if the estimated position signal 36 differs from the actual position signal 56 by more than a predetermined amount. In other embodiments, the diagnostic checker circuit 50 is responsive only to the estimated speed signal 38 and to the actual speed signal 58 and thus, in such embodiments, the diagnostic output signal 60 indicates a fault only if the estimated speed signal 38 differs from the actual speed signal 58 by more than a predetermined amount.

A sensor 70 is configured to measure the actual position of the motor 14 to generate what is referred to herein as the actual motor position signal 56 accordingly and/or to measure the actual motor speed 56 and to generate what is referred to herein as the actual motor speed signal 58 accordingly. It will be appreciated that although shown to generate both actual position signal 56 and actual speed signal 58, the sensor 70 alternatively may generate only one such signal. The sensor 70 may take various forms including, but not limited to an angular encoder, a resolver, or a position sensor. The sensor 70 may be a magnetic field sensor employing one or more magnetic field sensing elements. Sensor 70 may additionally or alternatively employ optical encoding circuitry and techniques. In addition to being provided to the diagnostic checker circuit 50, the actual position signal 56 and the actual speed signal 58 are coupled to the motor controller 22, as shown.

In embodiments in which the sensor 70 contains one or more magnetic field sensing elements, such elements can be, but are not limited to, a Hall effect element, a magnetoresistance element, or a magnetotransistor. As is known, there are different types of Hall effect elements, for example, a planar Hall element, a vertical Hall element, and a Circular Vertical Hall (CVH) element. As is also known, there are different types of magnetoresistance elements, for example, a semiconductor magnetoresistance element such as Indium Antimonide (InSb), a giant magnetoresistance (GMR, including spin-valve structures) element, an anisotropic magnetoresistance element (AMR), a tunneling magnetoresistance (TMR) element, and a magnetic tunnel junction (MTJ). The magnetic field sensing element may be a single element or, alternatively, may include two or more magnetic field sensing elements arranged in various configurations, e.g., a half bridge or full (Wheatstone) bridge. Depending on the device type and other application requirements, the magnetic field sensing element may be a device made of a type IV semiconductor material such as Silicon (Si) or Germanium (Ge), or a type III-V semiconductor material like Gallium-Arsenide (GaAs) or an Indium compound, e.g., Indium-Antimonide (InSb).

One example sensor 70 is an angle sensor including a Circular Vertical Hall (CVH) element and employing zero crossing detection. Another example sensor 70 is an angle sensor including a CORDIC processor to perform an arctangent computation on magnetic field signals from orthogonally positioned planar Hall effect elements.

The demand signal 24 is an externally generated signal provided as an input to the motor control system 10 in order to control operation of the motor 14. The demand signal 24 can control various parameters of the motor operation. For example, the demand signal 24 can indicate a desired motor speed, position, and/or torque. Furthermore, the demand signal 24 can take various formats, such as a Single Edge Nibble Transmission (SENT) format, a Serial Peripheral Interface (SPI) format, a Local Interconnect Network (LIN) format, a CAN (Controller Area Network) format, an Inter-Integrated Circuit (I²C) format, a pulse width modulated (PWM) signal, or other similar signal formats. The demand signal 24 can be generated by external controllers, processors, and inputs, such as an ECU in automotive applications. The motor controller 22 is configured to convert the demand signal 24 into a PWM signal 28 for coupling to the gate driver 18.

More particularly, the controller 22 responds to the demand signal 24, the actual position signal 56, and the actual speed signal 58 to generate the PWM signal 28 for coupling to the gate driver 18. In some embodiments, the controller 22 implements proportional-integral-derivative (PID) control techniques, whereby the controller operates on the measured motor phase voltages and currents to generate motor control signals to achieve the desired motor operation. The controller 22 may also implement domain conversion to convert the motor feedback signals to two-dimensional vector representation such as d/q reference for closed loop control using techniques such as PID processing and may additionally implement inverse domain conversion of the resulting control(s) to respective three phase motor control signals.

Various circuits and techniques are possible for providing the voltage measurement circuit 26 that coupled to one or more of the motor windings to measure one of more of the winding voltages 16_{A}, 16_{B}, 16c. Example voltage measurement circuit types include use of a resistive voltage sampling circuit (e.g., a resistor divider coupled to a motor phase), capacitive sensing techniques (e.g., use of a switched capacitor circuit) or external isolated amplifier.

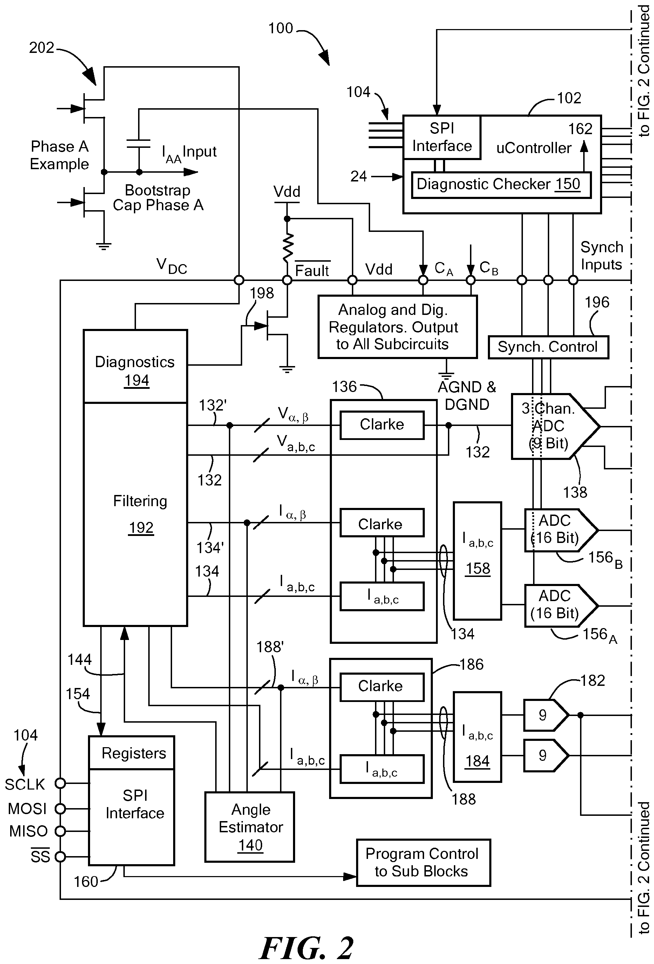

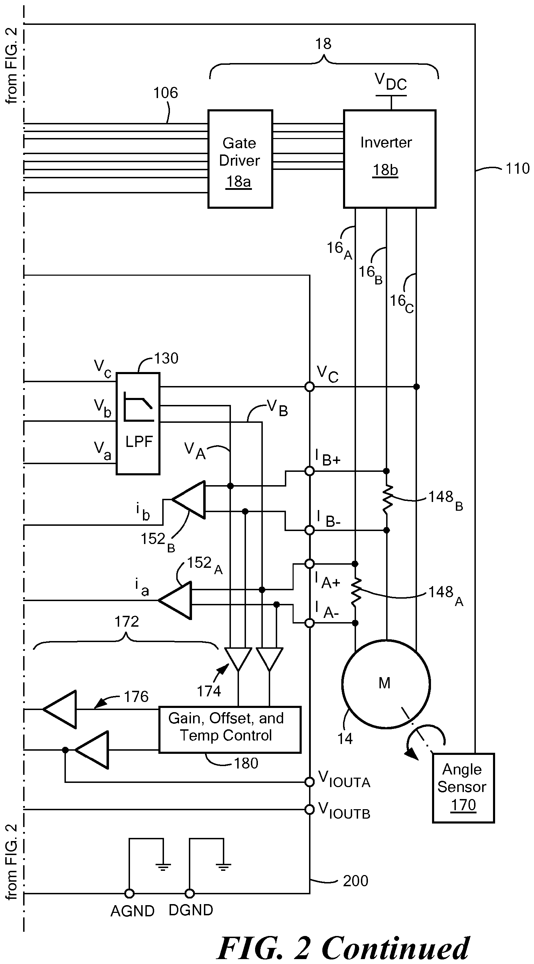

The current measurement circuit 30 coupled to one or more of the motor windings to measure one of more of the currents through the windings can likewise take various forms. For example, the current measurement circuit can utilize low side current sensing, high side current sensing or in-phase current sensing techniques. In low side or high side current sensing configurations, the current measurement circuit 30 can include one or more magnetic field sensing elements or one or more shunt elements coupled to one or more of the motor windings. In in-phase current sensing configurations, the current measurement circuit can include one or more magnetic field sensing elements or one or more series resistors (e.g., as shown in FIG. 2) configured to sense the current through one or more of the windings.

The motor control circuitry of FIG. 1 can be incorporated into one or more integrated circuits, each having one or more semiconductor or other die or substrates supporting the circuitry as desirable for a particular application. For example, the box labeled 72 in FIG. 1 can represent a single integrated circuit in which is contained the voltage measurement circuit 26, the current measurement circuit 30, the estimator 40, and the diagnostic checker circuit 50, with such circuits supported by a single semiconductor or other die or substrate, or supported by multiple substrates. As another example, some of the circuitry shown within box 72 (e.g., the diagnostic checker 50) may be implemented in a separate integrated circuit from the other such circuitry. Furthermore, circuitry illustrated in FIG. 1 external to the box 72 (e.g., the controller 22 and/or the sensor 70) can be provided in the same single integrated circuit, as in the example embodiment of FIG. 2.

Many variations are possible in terms of partitioning of the described motor control circuitry on one or more die or substrates in one or more integrated circuit packages and which variation is adopted can be influenced by safety requirements and space and cost considerations. For example, space and perhaps cost considerations can motivate integration of all of the motor control circuitry into a single integrated circuit package. On the other hand, safety considerations can make use of multiple die or substrates to support the motor control circuitry advantageous in order to thereby provide a measure of redundancy, even in embodiments in which the motor control circuitry is integrated into a single integrated circuit package, such as in the example embodiment of FIG. 2.

With the configuration of FIG. 1, motor control system 10 is provided with diagnostic capabilities by operation of the diagnostic checker 50, as may be useful to meet certain industry requirements particularly in safety critical applications, such as automotive electronic power steering for example. Furthermore, operational redundancy as can be useful to meet certain safety standards can be provided simply by use of both estimator 40 and sensor 70. A high level of safety standard compliance can be achieved by using two unique (i.e., non-homogenous) motor position and/or speed detections (i.e., the estimator 40 and the sensor 70) and the diagnostic checker circuit 50 to compare the estimated and actual motor position and/or speed. More particularly, "non-homogenous" sensing is intended to refer generally to parameter sensing or detection with different accuracies, with one or more different types of circuit elements and/or circuitry, in response to different input signals, and/or implementing different sensing methodologies in the processing channels as described in co-pending U.S. Patent Application No. 15/622,459, entitled "Sensor Integrated Circuits And Methods For Safety Critical Applications", which application is hereby incorporated herein in its entirety. In the context of FIG. 1, motor position and/or speed detection with the estimator 40 and motor position and/or speed detection with the sensor 70 present non-homogenous sensing of such motor parameters.

Referring to FIG. 2, an alternative motor control system 100 is shown in which like reference numbers refer to like elements. Motor control system 100 controls operation of motor 14 and includes gate driver 18a and inverting bridge, or simply inverter 18b. More particularly, gate driver 18a is configured to provide control signals (i.e., drive signals) to switching elements of the bridge 18b, which bridge may include field effect elements (FETs), bipolar junction transistors (BJTs), Silicon-Controlled Rectifiers (SCRs), thyristors, triacs, or other similar switching elements. Bridge 18b is configured to generate motor phase voltages 16_{A}, 16_{B}, 16_{C} for coupling to the motor windings.

The motor control system 100 includes a controller 102 which may be the same as or similar to controller 22 of FIG. 1. In the illustrated embodiment, controller 102 may be a Space Vector based PWM (SVPWM) controller configured to respond to a demand signal 24 and to input signals 104 to generate a PWM signal 106, that may be the same as or similar to PWM signal 28 (FIG. 1) to thereby control the gate driver 18a. Controller 102 includes an SPI interface and a diagnostic checker circuit 150, as will be described.

The motor phase voltages 16_{A}, 16_{B}, 16c are measured by measurement circuitry including a low pass filter 130 and an analog-to-digital converter (ADC) 138. The filter 130 and digitizer 138 filter and sample the phase voltages 16_{A}, 16_{B}, 16c respectively to generate measured phase voltage signal 132 for coupling to a conversion unit 136.

Motor winding currents are measured by measurement circuitry including series-coupled elements 148_{A}, 148_{B}, differential amplifiers 152_{A}, 152_{B}, ADCs 156_{A}, 156_{B} and a computation unit 158 to provide measured phase current signals 134 indicative of current through respective motor windings. In the example embodiment of FIG. 2, phase currents are measured in an in-phase fashion, using series resistors 148_{A}, 148_{B} coupled to (i.e., in series with) motor windings A, B, respectively, as shown. It will be appreciated that other types of phase current sensing is possible, as mentioned above. Computation unit 158 is responsive to two sensed phase currents iₐ, i_{b} to compute the third phase current i_{c} for coupling to conversion unit 136.

The conversion unit 136 is thus, responsive to measured phase voltage signal 132 (that may be the same as or similar to measured phase voltage signal 32 of FIG. 1) and to measured phase current signal 134 (that may be the same as or similar to measured phase current signal 34 of FIG. 1). Conversion unit 136 may implement Clarke transformation or other processing in order to convert the measured phase voltages 132 and the measured phase currents 134 into respective two-dimensional α, β quantities (i.e., transformed measured voltage signal 132' and transformed measured current signal 134') for coupling to a filter 192 and to an angle estimator 140, as shown.

Angle estimator 140 is responsive to the transformed measured voltage signal 132' and to the transformed measured current signal 134' to generate an estimated motor position signal 144 that may be the same as or similar to estimated motor position signal 38 of FIG. 1. Estimator 140 may additionally generate an estimated motor speed signal. Estimator 140 may be the same as or similar to estimator 40 of FIG. 1 and thus, may include neural network based "on-line" learning, a model reference adaptive system (MRAS), Kalman filters, an adaptive non-linear flux observer, and/or a sliding mode observer.

Filter 192 is configured to perform noise filtering on the estimated motor position signal 144 in order to generate a filtered estimated motor position signal 154 for coupling to an interface 160, as may be an SPI interface. Interface 160 provides signals 104 to the signal interface of the controller 102, as shown. Signals 104 represent a typical implementation of a SPI interface (SCLK, MOSI, MISO and SS are standard SPI interface wires) in order to access the status registers which include an indication of the estimated motor position and/or estimated motor speed for use by the controller 102 and more particularly by the diagnostic checker 150 as will be described.

A sensor 170 that may be the same as or similar to sensor 70 (FIG. 1) is here provided in the form of an angle sensor, as may be a magnetic field angle sensor of the type including a CVH sensing element for example. Angle sensor 170 provides an actual motor position signal 110 indicative of a rotational position of the motor 14 for coupling to the controller 102.

Controller 102 responds to the demand signal 24 and the actual motor position signal 110 and the motor current 134 (via the interface 104) to generate the PWM signal 106 for coupling to the gate driver 18a. The controller 102 may implement PID or other classic or modern control techniques to achieve the desired motor operation and domain conversion to convert the actual motor position signal 110 and motor current 134 into a two-dimensional vector representation for processing and to convert the resulting control signal to respective three phase motor control signals.

Motor control system 100 includes a diagnostic checker circuit 150, that may be the same as or similar to diagnostic checker circuit 50 of FIG. 1. In the embodiment of FIG. 2, diagnostic checker circuit 150 forms part of the controller 102. It will be appreciated that the diagnostic checker circuit 150 may alternatively be a separate element.

Diagnostic checker circuit 150 is coupled to receive actual motor position signal 110 from angle sensor 170 and estimated motor position signal 154 from estimator 140 (via interface signals 104) and is configured to perform a diagnostic comparison function. More particularly, the diagnostic checker circuit 150 is configured to compare the estimated position signal 154 to the actual position signal 110 and generate a diagnostic output signal 162 to indicate a fault if the estimated position signal 154 differs from the actual position signal 110 by more than a predetermined amount. The diagnostic output signal 162 can be provided in various formats to external circuits or systems, such as an ECU in automotive applications. For example, an interface of the controller 102 can encode the diagnostic output signal 162 in various formats or protocols, including Controller Area Network (CAN), Single Edge Nibble Transmission (SENT), Manchester, Serial Peripheral Interface (SPI), Inter-Integrated Circuit (I²C), Local Interconnect Network (LIN), etc. It will be appreciated that although the diagnostic checker circuit 150 is shown to be responsive to only the estimated and actual motor position signals 154, 110, in embodiments, the diagnostic checker circuit 150 can additionally process estimated and actual motor speed signals. Additional details and examples of the diagnostic checker circuit 150 are described below in connection with FIGs. 3 and 3A.

Because the actual motor position signal 110 and the estimated motor position signal 154 are generated using different circuitry, inputs, and methodologies, a synchronization control circuit 196 is provided to synchronize sampling of the phase voltages and currents with operation of the angle sensor 170. To this end, synchronization control circuit 196 synchronizes processing of the actual motor position signal 110 by the controller 102 and diagnostic checker circuit 150 with sampling of the motor voltages and currents by ADCs 138, 156_{A}, 156_{B}.

Much of the motor control circuitry of FIG. 2 is shown within a box 200, which box may represent a single integrated circuit package. Alternatively however, it will be appreciated that some of the motor control circuitry shown within box 200 instead can be provided in a separate integrated circuit or other separate form. Additionally, circuitry shown external to box 200 can instead be incorporated within the same integrated circuit 200. For example, angle sensor 170 and/or controller 102 (or processing components of controller 102) can be implemented in the same integrated circuit package 200.

Furthermore, within single integrated circuit 200, it may be desirable to provide multiple semiconductor die or other substrates to support some of the circuitry. For example, for safety standard compliance where operational redundancy by use of the both angle sensor 170 and the estimator 140 is desired, it may be desirable to provide the angle sensor 170 and the estimator 140 on separate substrates.

Power may be provided for motor control circuity (such as the circuitry shown within box 200) by use of a bootstrap capacitor coupled to a leg of inverter 18b (which leg is additionally shown by arrow 202). It will be appreciated that other circuits and techniques are possible to power the motor control circuitry.

In some embodiments, it may be desirable to provide additional redundancy and/or more generally, implement circuitry and techniques to meet certain safety requirements by processing certain parameters in a redundant, but non-homogenous fashion, as described in co-pending U.S. Patent Application No. 15/622,459, entitled "Sensor Integrated Circuits And Methods For Safety Critical Applications", which application is hereby incorporated herein in its entirety. To this end, in FIG. 2, motor winding currents iₐ and i_{b} are additionally measured in a second path 172 including amplifiers 174, 176, control circuitry 180 as may implement gain, offset, and temperature control techniques, ADCs 182, and computation unit 184, as shown. This second phase current measurement circuitry 172 provides redundant measured phase current signals 188 for coupling to a transformation unit 186 that, like transformation unit 136 is configured to transform measured phase current signals 188 into two-dimensional α, β measured phase current signals 188'. A diagnostic circuit 194 may be provided to compare the measured phase current signals 134 (or transformed phase current signals 134') to non-homogenously measured phase current signals 188 (or transformed phase current signals 188') and to provide a fault output signal 198 indicative of whether the compared signals differ by more than a predetermined amount.

Example diagnostic checker circuits suitable for providing diagnostic checker circuits 50, 150 in the motor control systems 10, 100 or FIGs. 1 and 2, respectively, are shown in FIGs. 3 and 3A. Referring to FIG. 3, an example diagnostic checker circuit 300 includes a first window comparator 310, a window comparator 320, a logic circuit 330, and a time delay synchronizer 340. Considering the example diagnostic checker circuit 300 in connection with motor control system 10 of FIG. 1 for illustration purposes, window comparator 310 is responsive to estimated motor position signal 36 and actual motor position signal 56 and window comparator responsive to 320 is responsive to estimated motor speed signal 38 and actual motor speed signal 58.

The time delay synchronizer 340 generates one or more synchronizing, or clock signals, here signals 342, 344, for coupling to window comparators 310, 320, respectively, as shown. The estimated and actual signals (e.g., signals 36, 56) may result from different processing speeds and thus, may themselves have different speed characteristics. Accordingly, the synchronizing signals 342, 344 control the respective window comparators 310, 320, to ensure that the comparisons are performed on time synchronized input signals.

Window comparator 310 is configured to compare signals 36, 56 and to generate fault signal 314 to indicate a fault if the signals 36, 56 differ by more than a predetermined amount. In this configuration, one of the signals 36, 56 provides the comparator threshold voltage and the other sampled signal provides the comparator input. With this configuration, the comparator output signal 314 is provided in a first logic state when the difference between the first and second sampled signals 36, 56 is less than a predetermined amount, as may be established by a resistor divider within the window comparator, and is in a second logic state when the difference between the first and second sampled signals 36, 56 is greater than the predetermined amount. In embodiments, the predetermined amount may be specified in terms of an absolute acceptable variation of the sensor output (e.g., in an angle sensor, the predetermined amount may correspond to a magnetic field angle error of 10° for example). In some embodiments, the predetermined amount can be a percentage difference (e.g., in an angle sensor, the predetermined amount can correspond to the sensor output being within 5% of the actual magnetic field angle). The predetermined amount can also be a programmable or selectable value.

It will be appreciated that the fault signal 314 can take various forms, such as a logic signal having levels as set forth above depending on the difference between the signals 36, 56. As an alternative for example, the fault signal 314 can take the form of a flag that is set when the difference between the sampled signals 36, 56 differs by the predetermined amount and is not cleared until some system function occurs or until cleared by a system processor, for example.

Window comparator 320 can operate on estimated and actual motor speed signals 38, 58 in a manner similar to how window comparator 310 operates on estimated and actual motor position signals 36, 56. Thus, window comparator 320 compares (in a synchronized fashion in response to synchronizing signal 344) the estimated motor speed signal 38 and the actual motor speed signal 58 and generates a fault signal 324 to indicate a fault if the signals 38, 58 differ by more than a predetermined amount.

Logic circuit 330 is responsive to the fault signals 314, 324 to generate diagnostic output signal 334, which signal may be the same as or similar to signal 60 of FIG. 1 and which thus, provides an indication of whether the estimated motor position signal 36 differs from the actual motor position signal 56 by more than a first predetermined amount or whether the estimated motor speed signal 38 differs from the actual motor speed signal 58 by more than a second predetermined amount.

Referring to FIG. 3A, an alternative diagnostic checker circuit 400 includes a first window comparator 410, a second window comparator 420, a first delay element 450, a second delay element 460, and a logic circuit 430. Again using the motor control system 10 (FIG. 1) as an illustrative example, the diagnostic checker circuit 400 is responsive to estimated and actual motor position signals 36, 56 and to estimated and actual motor speed signals 38, 58 and is configured to generate a diagnostic output signal 434 (which may be the same as or similar to diagnostic output signal 60 of FIG. 1).

More particularly, delay element 450 is coupled in series between estimated motor position signal 36 and window comparator 410 to delay such input signal for comparison with the actual motor position signal 58 by window comparator 410. It will be appreciated that the delay element 450 can be coupled in series with the faster of the two input signals 36, 56. In embodiments, an Exclusive-OR (XOR) logic circuit can be provided to effectively couple the delay element 450 in series with a selected (i.e., faster) one of the signals 36, 56.

It will be appreciated that in some embodiments, another delay element (not shown) additionally may be provided in series with the slower one of the signals 36, 56 in order to permit adjustment of the slower processed signal as well, in order to thereby generate input signals for window comparator 410 that have approximately the same speed for subsequent processing. Window comparator 410 can be the same as or similar to window comparator 310 (FIG. 3) and is configured to compare its input signals to generate fault signal 414 to indicate a fault if the input signals differ by more than a predetermined amount, which here again may take the form of a predetermined absolute amount or a predetermined percentage as examples.

Similarly, delay element 460 is coupled in series between estimated motor speed signal 38 and window comparator 420 to delay such input signal for comparison with the actual motor speed signal 58 by window comparator 420. Window comparator 420 is configured to compare its input signals to generate fault signal 424 to indicate a fault if the input signals differ by more than a predetermined amount, which here again may take the form of a predetermined absolute amount or a predetermined percentage as examples.

Logic circuit 430 is responsive to the fault signals 414, 424 to generate diagnostic output signal 434, which signal may be the same as or similar to signal 60 of FIG. 1 and which thus, provides an indication of whether the estimated motor position signal 36 differs from the actual motor position signal 56 by more than a first predetermined amount or whether the estimated motor speed signal 38 differs from the actual motor speed signal 58 by more than a second predetermined amount.

It will be appreciated that the diagnostic checker circuit configurations 300, 400 shown in FIGs. 3 and 3A, respectively, could also be used to provide the diagnostic circuit 194 of FIG. 2 to compare measured motor current signals 134 (or 134') to measured motor current signals 188 (or 188').

## Claims

1. A motor control system configured to control operation of a motor (14) having a plurality of windings, the motor control system comprising:
a gate driver (18) to provide a control signal to one or more switching elements controlling a voltage applied to each of the plurality of windings;
a controller (22) to generate a PWM signal based on a received demand signal and to provide the PWM signal to the gate driver (18);
a voltage measurement circuit (26) coupled to one or more of the plurality of windings to measure a voltage associated with the one or more of the plurality of windings to which the voltage measurement circuit (26) is coupled;
a current measurement circuit (30) coupled to one or more of the plurality of windings to measure a current through the one or more of the plurality of windings to which the current measurement circuit (30) is coupled;
an estimator (40) configured to respond to the voltage measured by the voltage measurement circuit (26) and/or to the current measured by the current measurement circuit (30) to generate an estimated position signal (36) indicative of an estimate of a position of the motor (14) and/or an estimated speed signal (38) indicative of an estimate of a speed of the motor and to provide the estimated position signal (36) and/or the estimated speed signal (36) to the controller; and
a checker circuit (400) configured to respond to the estimated position signal (36) and/or the estimated speed signal (38) to compare the estimated position signal (36) and/or the estimated speed signal (38) to a respective one of an actual position of the motor (56) or an actual speed of the motor (58).

2. The motor control system of claim 1, wherein the estimator is responsive to the voltage measured by the voltage measurement circuit; (26) and to the current measured by the current measurement circuit (30) to generate the estimated position signal and the estimated speed signal, wherein the checker circuit (400) is responsive to the estimated position signal and to the estimated speed signal and configured to compare the estimated position signal to the actual position of the motor and to compare the estimated speed signal to the actual speed of the motor.

3. The motor control system of claim 2, further comprising a sensor circuit configured to measure the actual position of the motor and the actual speed of the motor.

4. The motor control system of claim 3, wherein the sensor circuit comprises one or more of: an angular encoder, a resolver, or a position sensor (70; 170).

5. The motor control system of claim 4, wherein the sensor circuit comprises one or more magnetic field sensing elements.

6. The motor control system of claim 1, wherein the current measurement circuit comprises a low side current measurement circuit or a high side current measurement or an in-phase current measurement circuit.

7. The motor control system of claim 6, wherein the current measurement circuit is a low side current measurement circuit or high side current measurement circuit comprising one or more shunt elements (148a; 148b) coupled to one or more of the plurality of windings.

8. The motor control system of claim 6, wherein the current measurement circuit is a low side current measurement circuit or high side current measurement circuit comprising one or more magnetic field sensing elements.

9. The motor control system of claim 6, wherein the current measurement circuit is an in-phase current measurement circuit comprising one or more magnetic field sensing elements or one or more series resistors configured to sense the current through one or more of the plurality of windings.

10. The motor control system of claim 5 or 9, wherein the one or more magnetic field sensing elements comprise one or more Hall effect elements and/or magnetoresistance elements.

11. The motor control system of claim 10, wherein the one or more magnetic field sensing elements comprise one or more magnetoresistance elements in the form of one or more GMR elements, AMR elements, TMR elements, and/or MJT elements.

12. The motor control system of claim 1, wherein the motor comprises: a brushless DC motor (BLDC), an inductive AC motor (IACM), or a permanent magnet synchronous motor (PMSM) or other synchronous or asynchronous AC motors.

13. The motor control system of claim 1, wherein the checker circuit (400) generates a diagnostic output signal indicative of a fault if the estimated position signal differs from the actual position of the motor by greater than a first predetermined amount or if the estimated speed signal differs from the actual speed of the motor by more than a second predetermined amount.

14. The motor control system of claim 13, wherein the checker circuit (400) comprises a window comparator.

15. The motor control system of claim 14, wherein the checker circuit (400) comprises:
a first window comparator (310) responsive to the estimated position signal and to the actual position of the motor to generate the diagnostic output signal indicative of a fault if the estimated position signal differs from the actual position of the motor by greater than the first predetermined amount; and
a second window comparator (320) responsive to the estimated speed signal and to the actual speed of the motor to generate the diagnostic output signal indicative of a fault if the estimated speed signal differs from the actual speed of the motor by more than the second predetermined amount.

16. The motor control system of claim 15, wherein the checker circuit (400) further comprises a time delay synchronizer (340) providing a clock signal to the first window comparator (310) and to the second window comparator (320).

17. The motor control system of claim 15, wherein the checker circuit (400) further comprises a first delay element (450) coupled to an input of the first window comparator (320) and configured to delay the estimated position signal for coupling to the first window comparator and a second delay element (460) coupled to an input of the second window comparator (320) and configured to delay the estimated speed signal for coupling to the second window comparator.

18. The motor control system of claim 3, further comprising a single semiconductor die configured to support the estimator and the checker circuit (400).

19. The motor control system of claim 18, wherein the single semiconductor die additionally supports the sensor circuit configured to measure the actual position of the motor and the actual speed of the motor.

20. A method to detect a fault in a motor control system for controlling operation of a motor (14) having a plurality of windings and comprising a gate driver (18) to provide a control signal to one or more switching elements controlling a voltage applied to the plurality of windings, the method comprising:
measuring a voltage associated with one or more of the plurality of windings;
measuring a current through one or more of the plurality of windings;
estimating a position (36) of the motor and/or a speed (38) of the motor in response to the measured voltage and the measured current; and
providing a fault output signal (198) indicative of the fault if the estimated motor position (36) differs from an actual motor position (56) by more than a first predetermined amount or if the estimated motor speed (38) differs from an actual motor speed (58) by more than a second predetermined amount.

21. The method of claim 20, further comprising estimating the position of the motor and the speed of the motor in response to the measured voltage and the measured current.

22. The method of claim 21, further comprising measuring the actual motor position and the actual motor speed.

23. The method of claim 22, wherein estimating the position of the motor and the speed of the motor, providing a fault output signal, and measuring the actual motor position and the actual motor speed are implemented on a single semiconductor die.

24. The method of claim 20, wherein measuring the current through the plurality of windings comprises coupling one or more shunt elements to the plurality of windings.

25. The method of claim 20, wherein measuring the current through the plurality of windings comprises providing one or more magnetic field sensing elements or one or more in-phase series resistors to sense the current through the plurality of windings.

26. The method of claim 20, wherein providing the fault output signal comprises:
comparing the estimated motor position to the actual motor position; and
comparing the estimated motor speed to the actual motor speed.

## Patentansprüche

1. Motorsteuersystem, das so konfiguriert ist, dass es den Betrieb eines Motors (14) mit einer Vielzahl von Wicklungen steuert, das Motorsteuersystem umfassend:
einen Gate-Treiber (18) zum Bereitstellen eines Steuersignals für ein oder mehrere Schaltelemente, die eine an jede der Vielzahl von Wicklungen angelegte Spannung steuern;
eine Steuerung (22) zum Erzeugen eines PWM-Signals basierend auf einem empfangenen Anforderungssignal und zum Bereitstellen des PWM-Signals an den Gate-Treiber (18);
eine Spannungsmessschaltung (26), die mit einer oder mehreren der Vielzahl von Wicklungen gekoppelt ist, um eine Spannung zu messen, die mit der einen oder mehreren der Vielzahl von Wicklungen assoziiert ist, mit der die Spannungsmessschaltung (26) gekoppelt ist;
eine Strommessschaltung (30), die mit einer oder mehreren der Vielzahl von Wicklungen gekoppelt ist, um eine Spannung zu messen, die mit der einen oder mehreren der Vielzahl von Wicklungen assoziiert ist, mit der die Spannungsmessschaltung (30) gekoppelt ist;
einen Schätzer (40), der so konfiguriert ist, dass er auf die von der Spannungsmessschaltung (26) gemessene Spannung und/oder auf den von der Strommessschaltung (30) gemessenen Strom anspricht, um ein geschätztes Positionssignal (36), das eine Schätzung einer Position des Motors (14) angibt, und/oder ein geschätztes Drehzahlsignal (38) zu erzeugen, das eine Schätzung einer Drehzahl des Motors angibt, und um das geschätzte Positionssignal (36) und/oder das geschätzte Drehzahlsignal (36) an die Steuerung bereitzustellen; und
eine Prüfschaltung (400), die so konfiguriert ist, dass sie auf das geschätzte Positionssignal (36) und/oder das geschätzte Drehzahlsignal (38) anspricht, um das geschätzte Positionssignal (36) und/oder das geschätzte Drehzahlsignal (38) mit einer jeweiligen tatsächlichen Position des Motors (56) oder einer tatsächlichen Drehzahl des Motors (58) zu vergleichen.

2. Motorsteuersystem nach Anspruch 1, wobei der Schätzer auf die von der Spannungsmessschaltung (26) gemessene Spannung und auf den von der Strommessschaltung gemessenen Strom anspricht, um das geschätzte Positionssignal und das geschätzte Drehzahlsignal zu erzeugen, wobei die Prüfschaltung (400) auf das geschätzte Positionssignal und auf das geschätzte Drehzahlsignal anspricht und so konfiguriert ist, dass sie das geschätzte Positionssignal mit der tatsächlichen Position des Motors vergleicht und das geschätzte Drehzahlsignal mit der tatsächlichen Drehzahl des Motors vergleicht.

3. Motorsteuersystem nach Anspruch 2, ferner umfassend eine Sensorschaltung, die so konfiguriert ist, dass sie die tatsächliche Position des Motors und die tatsächliche Drehzahl des Motors misst.

4. Motorsteuersystem nach Anspruch 3, wobei die Sensorschaltung eines oder mehrere der Folgenden umfasst: einen Winkelkodierer, einen Resolver oder einen Positionssensor (70; 170).

5. Motorsteuersystem nach Anspruch 4, wobei die Sensorschaltung ein oder mehrere Magnetfeldsensorelemente umfasst.

6. Motorsteuersystem nach Anspruch 1, wobei die Strommessschaltung eine Low-Side-Strommessschaltung oder eine High-Side-Strommessung oder eine phasengleiche Strommessschaltung umfasst.

7. Motorsteuersystem nach Anspruch 6, wobei die Strommessschaltung eine Low-Side-Strommessschaltung oder eine High-Side-Strommessschaltung ist, die ein oder mehrere Shunt-Elemente (148a; 148b) umfasst, die mit einer oder mehreren der Vielzahl von Wicklungen gekoppelt sind.

8. Motorsteuersystem nach Anspruch 6, wobei die Strommessschaltung eine Low-Side-Strommessschaltung oder eine High-Side-Strommessschaltung ist, die ein oder mehrere Magnetfeld-Sensorelemente umfasst.

9. Motorsteuersystem nach Anspruch 6, wobei die Strommessschaltung eine phasengleiche Strommessschaltung ist, die ein oder mehrere Magnetfeld-Sensorelemente oder einen oder mehrere Reihenwiderstände umfasst, die so konfiguriert sind, dass sie den Strom durch eine oder mehrere der Vielzahl von Wicklungen erfassen.

10. Motorsteuersystem nach Anspruch 5 oder 9, wobei das eine oder die mehreren Magnetfeld-Sensorelemente ein oder mehrere Hall-Effekt-Elemente und/oder Magnetowiderstandselemente umfassen.

11. Motorsteuersystem nach Anspruch 10, wobei das eine oder die mehreren Magnetfeld-Sensorelemente ein oder mehrere Magnetowiderstandselemente in der Form von einem oder mehreren GMR-Elementen, AMR-Elementen, TMR-Elementen und/oder MJT-Elementen umfassen.

12. Motorsteuersystem nach Anspruch 1, wobei der Motor umfasst:
einen bürstenlosen Gleichstrommotor (BLDC), einen induktiven Wechselstrommotor (IACM) oder einen Permanentmagnet-Synchronmotor (PMSM) oder andere synchrone oder asynchrone Wechselstrommotoren.

13. Motorsteuersystem nach Anspruch 1, wobei die Prüfschaltung (400) ein Diagnoseausgangssignal erzeugt, das einen Fehler angibt, wenn das geschätzte Positionssignal von der tatsächlichen Position des Motors um mehr als einen ersten vorbestimmten Betrag abweicht oder wenn das geschätzte Drehzahlsignal von der tatsächlichen Drehzahl des Motors um mehr als einen zweiten vorbestimmten Betrag abweicht.

14. Motorsteuersystem nach Anspruch 13, wobei die Prüfschaltung (400) einen Fensterkomparator umfasst.

15. Motorsteuersystem nach Anspruch 14, wobei die Prüfschaltung (400) umfasst:
einen ersten Fensterkomparator (310), der auf das geschätzte Positionssignal und auf die tatsächliche Position des Motors anspricht, um das Diagnoseausgangssignal zu erzeugen, das einen Fehler angibt, wenn das geschätzte Positionssignal von der tatsächlichen Position des Motors um mehr als den ersten vorbestimmten Betrag abweicht; und
einen zweiten Fensterkomparator (320), der auf das geschätzte Drehzahlsignal und auf die tatsächliche Drehzahl des Motors anspricht, um das Diagnoseausgangssignal zu erzeugen, das einen Fehler angibt, wenn das geschätzte Drehzahlsignal von der tatsächlichen Drehzahl des Motors um mehr als den zweiten vorbestimmten Betrag abweicht.

16. Motorsteuersystem nach Anspruch 15, wobei die Prüfschaltung (400) ferner einen Zeitverzögerungssynchronisierer (340) umfasst, der ein Taktsignal an den ersten Fensterkomparator (310) und an den zweiten Fensterkomparator (320) bereitstellt.

17. Motorsteuersystem nach Anspruch 15, wobei die Prüfschaltung (400) ferner ein erstes Verzögerungselement (450) umfasst, das mit einem Eingang des ersten Fensterkomparators (320) gekoppelt und so konfiguriert ist, dass es das geschätzte Positionssignal zum Koppeln mit dem ersten Fensterkomparator verzögert, und ein zweites Verzögerungselement (460), das mit einem Eingang des zweiten Fensterkomparators (320) gekoppelt und so konfiguriert ist, dass es das geschätzte Drehzahlsignal zum Koppeln mit dem zweiten Fensterkomparator verzögert.

18. Motorsteuersystem nach Anspruch 3, ferner umfassend einen einzelnen Halbleiterchip, der zur Unterstützung des Schätzers und der Prüfschaltung (400) konfiguriert ist.

19. Motorsteuersystem nach Anspruch 18, wobei der einzelne Halbleiterchip zusätzlich die Sensorschaltung unterstützt, die so konfiguriert ist, dass sie die tatsächliche Position des Motors und die tatsächliche Drehzahl des Motors misst.

20. Verfahren zum Erkennen eines Fehlers in einem Motorsteuersystem zum Steuern des Betriebs eines Motors (14), der eine Vielzahl von Wicklungen aufweist und einen Gate-Treiber (18) umfasst, um ein Steuersignal an ein oder mehrere Schaltelemente bereitzustellen, die eine an die Vielzahl von Wicklungen angelegte Spannung steuern, das Verfahren umfassend:
Messen einer Spannung, die mit einer oder mehreren der Vielzahl von Wicklungen assoziiert ist;
Messen eines Stroms durch eine oder mehrere der Vielzahl von Wicklungen;
Schätzen einer Position (36) des Motors und/oder einer Drehzahl (38) des Motors in Reaktion auf die gemessene Spannung und den gemessenen Strom; und
Bereitstellen eines Fehlerausgangssignals (198), das den Fehler angibt, wenn sich die geschätzte Motorposition (36) von einer tatsächlichen Motorposition (56) um mehr als einen ersten vorbestimmten Betrag unterscheidet oder wenn sich die geschätzte Motordrehzahl (38) von einer tatsächlichen Motordrehzahl (58) um mehr als einen zweiten vorbestimmten Betrag unterscheidet.

21. Verfahren nach Anspruch 20, ferner umfassend das Schätzen der Position des Motors und der Drehzahl des Motors in Reaktion auf die gemessene Spannung und den gemessenen Strom.

22. Verfahren nach Anspruch 21, ferner umfassend das Messen der tatsächlichen Motorposition und der tatsächlichen Motordrehzahl.

23. Verfahren nach Anspruch 22, wobei das Schätzen der Position des Motors und der Drehzahl des Motors, ein Fehlerausgangssignal und Messen der tatsächlichen Motorposition und der tatsächlichen Motordrehzahl, die auf einem einzelnen Halbleiterchip implementiert sind, bereitstellt.

24. Verfahren nach Anspruch 20, wobei das Messen des Stroms durch die Vielzahl von Wicklungen das Koppeln eines oder mehrerer Shunt-Elemente an die Vielzahl von Wicklungen umfasst.

25. Verfahren nach Anspruch 20, wobei das Messen des Stroms durch die Vielzahl von Wicklungen das Bereitstellen eines oder mehrerer Magnetfeld-Sensorelemente oder eines oder mehrerer phasengleicher Serienwiderstände zum Erfassen des Stroms durch die Vielzahl von Wicklungen umfasst.

26. Verfahren nach Anspruch 20, wobei das Bereitstellen des Fehlerausgangssignals umfasst: Vergleichen der geschätzten Motorposition mit der tatsächlichen Motorposition; und Vergleichen der geschätzten Motordrehzahl mit der tatsächlichen Motordrehzahl.

## Revendications

1. Système de commande moteur configuré pour commander le fonctionnement d'un moteur (14) ayant une pluralité d'enroulements, le système de commande de moteur comprenant :
un entraînement de grille (18) pour fournir un signal de commande à un ou plusieurs éléments de commutation commandant une tension appliquée à chacun de la pluralité d'enroulements ;
un dispositif de commande (22) pour générer un signal PWM basé sur un signal de demande reçu et pour fournir le signal PWM à l'entraînement de grille (18) ;
un circuit de mesure de tension (26) couplé à un ou plusieurs de la pluralité d'enroulements pour mesurer une tension associée aux un ou plusieurs de la pluralité d'enroulements auxquels le circuit de mesure de tension (26) est couplé ;
un circuit de mesure de courant (30) couplé à un ou plusieurs de la pluralité d'enroulements pour mesurer un courant à travers les un ou plusieurs de la pluralité d'enroulements auxquels le circuit de mesure de courant (30) est couplé ;
un estimateur (40) configuré pour répondre à la tension mesurée par le circuit de mesure de tension (26) et/ou au courant mesuré par le circuit de mesure de courant (30) pour générer un signal de position estimé (36) indiquant une estimation d'une position du moteur (14) et/ou un signal de vitesse estimé (38) indiquant une estimation d'une vitesse du moteur et pour fournir le signal de position estimé (36) et/ou le signal de vitesse estimé (36) au dispositif de commande ; et
un circuit vérificateur (400) configuré pour répondre au signal de position estimé (36) et/ou au signal de vitesse estimé (38) pour comparer le signal de position estimé (36) et/ou le signal de vitesse estimé (38) à l'une respective d'une position réelle du moteur (56) ou d'une vitesse réelle du moteur (58).

2. Système de commande moteur selon la revendication 1, dans lequel l'estimateur réagit à la tension mesurée par le circuit de mesure de tension (26) et au courant mesuré par le circuit de mesure de courant pour générer le signal de position estimé et le signal de vitesse estimé, dans lequel le circuit vérificateur (400) réagit au signal de position estimé et au signal de vitesse estimé et configuré pour comparer le signal de position estimée à la position réelle du moteur et pour comparer le signal de vitesse estimé à la vitesse réelle du moteur.

3. Système de commande moteur selon la revendication 2, comprenant en outre un circuit de détecteur configuré pour mesurer la position réelle du moteur et la vitesse réelle du moteur.

4. Système de commande moteur selon la revendication 3, dans lequel le circuit de détecteur comprend un ou plusieurs parmi :
un codeur angulaire, un résolveur ou un détecteur de position (70 ; 170).

5. Système de commande moteur selon la revendication 4, dans lequel le circuit de détecteur comprend un ou plusieurs éléments de détection de champ magnétique.

6. Système de commande moteur selon la revendication 1, dans lequel le circuit de mesure de courant comprend un circuit de mesure de courant low side ou une mesure de courant high side ou un circuit de mesure de courant en phase.

7. Système de commande moteur selon la revendication 6, dans lequel le circuit de mesure de courant est un circuit de mesure de courant low side ou un circuit de mesure de courant high side comprenant un ou plusieurs éléments de shunt (148a ; 148b) couplés à un ou plusieurs de la pluralité d'enroulements.

8. Système de commande moteur selon la revendication 6, dans lequel le circuit de mesure de courant est un circuit de mesure de courant low side ou un circuit de mesure de courant high side comprenant un ou plusieurs éléments de détection de champ magnétique.

9. Système de commande moteur selon la revendication 6, dans lequel le circuit de mesure de courant est un circuit de mesure courant en phase comprenant un ou plusieurs éléments de détection de champ magnétique ou une ou plusieurs résistances en série configurées pour détecter le courant à travers un ou plusieurs de la pluralité d'enroulements.

10. Système de commande moteur selon la revendication 5 ou 9, dans lequel les un ou plusieurs éléments de détection de champ magnétique comprennent un ou plusieurs éléments à effet Hall et/ou élément magnéto-résistif.

11. Système de commande moteur selon la revendication 10, dans lequel les un ou plusieurs éléments de détection de champ magnétique comprennent un ou plusieurs éléments magnéto-résistif sous la forme d'un ou plusieurs éléments GMR, éléments AMR, éléments TMR et/ou éléments MTJ.

12. Système de commande moteur selon la revendication 1, dans lequel le moteur comprend : un moteur DC sans balais (BLDC), un moteur CA inductif (IACM) ou un moteur synchrone à aimant permanent (PMSM) ou d'autres moteurs CA synchrones ou asynchrones.

13. Système de commande moteur selon la revendication 1, dans lequel le circuit vérificateur (400) génère un signal de sortie de diagnostic indiquant une défaillance si le signal de position estimé diffère de la position réelle du moteur d'une valeur supérieure à une première quantité prédéterminée ou si le signal de vitesse estimé diffère de la vitesse réelle du moteur de plus d'une seconde quantité prédéterminée.

14. Système de commande moteur selon la revendication 13, dans lequel le circuit vérificateur (400) comprend un comparateur de fenêtre.

15. Système de commande moteur selon la revendication 14, dans lequel le circuit vérificateur (400) comprend :
un premier comparateur de fenêtre (310) répondant au signal de position estimé et à la position réelle du moteur pour générer le signal de sortie de diagnostic indiquant une défaillance si le signal de position estimé diffère de la position réelle du moteur d'une valeur supérieure à la première quantité prédéterminée ; et
un second comparateur de fenêtre (320) répondant au signal de vitesse estimé et à la vitesse réelle du moteur pour générer le signal de sortie de diagnostic indiquant une défaillance si le signal de vitesse estimé diffère de la vitesse réelle du moteur de plus que la seconde quantité prédéterminée.

16. Système de commande moteur selon la revendication 15, dans lequel le circuit vérificateur (400) comprend en outre un synchroniseur de période de retard (340) fournissant un signal d'horloge au premier comparateur de fenêtre (310) et au second comparateur de fenêtre (320).

17. Système de commande moteur selon la revendication 15, dans lequel le circuit vérificateur (400) comprend en outre un premier élément de retard (450) couplé à une entrée du premier comparateur de fenêtre (320) et configuré pour retarder le signal de position estimé pour le couplage au premier comparateur de fenêtre et un second élément de retard (460) couplé à une entrée du second comparateur de fenêtre (320) et configuré pour retarder le signal de vitesse estimé pour le couplage au second comparateur de fenêtre.

18. Système de commande moteur selon la revendication 3, comprenant en outre une unique matrice de semi-conducteur configurée pour supporter l'estimateur et le circuit vérificateur (400).

19. Système de commande moteur selon la revendication 18, dans lequel l'unique matrice de semi-conducteur supporte également le circuit de détecteur configuré pour mesurer la position réelle du moteur et la vitesse réelle du moteur.

20. Procédé de détection d'une défaillance dans un système de commande moteur pour la commande du fonctionnement d'un moteur (14) ayant une pluralité d'enroulements et comprenant un entraînement de grille (18) pour fournir un signal de commande à un ou plusieurs éléments de commutation commandant une tension appliquée à la pluralité d'enroulements, le procédé comprenant :
la mesure d'une tension associée à un ou plusieurs de la pluralité d'enroulements ;
la mesure d'un courant à travers un ou plusieurs de la pluralité d'enroulements ;
l'estimation d'une position (36) du moteur et/ou d'une vitesse (38) du moteur en réponse à la tension mesurée et au courant mesuré ; et
la fourniture d'un signal de sortie de défaillance (198) indiquant la défaillance si la position estimée du moteur (36) diffère d'une position réelle du moteur (56) de plus d'une première quantité prédéterminée ou si la vitesse estimée du moteur (38) diffère d'une vitesse réelle du moteur (58) de plus qu'une seconde quantité prédéterminée.

21. Procédé selon la revendication 20, comprenant en outre l'estimation de la position du moteur et de la vitesse du moteur en réponse à la tension mesurée et au courant mesuré.

22. Procédé selon la revendication 21, comprenant en outre la mesure de la position réelle du moteur et de la vitesse réelle du moteur.

23. Procédé selon la revendication 22, dans lequel l'estimation de la position du moteur et de la vitesse du moteur, la fourniture d'un signal de sortie de défaillance, et la mesure de la position réelle du moteur et de la vitesse réelle du moteur sont mises en œuvre sur une unique matrice de semi-conducteur.

24. Procédé selon la revendication 20, dans lequel la mesure du courant à travers la pluralité d'enroulements comprend le couplage d'un ou plusieurs éléments shunt à la pluralité d'enroulements.

25. Procédé selon la revendication 20, dans lequel la mesure du courant à travers la pluralité d'enroulements comprend la fourniture d'un ou plusieurs éléments de détection de champ magnétique ou d'une ou plusieurs résistances en série en phase pour détecter le courant à travers la pluralité d'enroulements.

26. Procédé selon la revendication 20, dans lequel la fourniture du signal de sortie de défaillance comprend : la comparaison de la position estimée du moteur à la position réelle du moteur ; et la comparaison de la vitesse estimée du moteur à la vitesse réelle du moteur.
